# FASCICULE DE BREVET EUROPEEN

(11) **EP 3 167 420 B1**
(45) Date de publication et mention de la délivrance du brevet: **25.11.2020**
(21) Numéro de dépôt: 15750120.6
(22) Date de dépôt: 10.07.2015
(51) Int. Cl.: G06Q 20/42

(54) **PROCÉDÉ DE GESTION D'UNE TRANSACTION, SERVEUR, PRODUIT PROGRAMME D'ORDINATEUR ET MEDIUM DE STOCKAGE CORRESPONDANTS**
VERFAHREN ZUR VERWALTUNG EINER TRANSAKTION, ENTSPRECHENDE VORRICHTUNG, COMPUTERPROGRAMMPRODUKT UND SPEICHERMEDIUM
METHOD FOR MANAGING A TRANSACTION, CORRESPONDING SERVER, COMPUTER PROGRAM PRODUCT AND STORAGE MEDIUM

(30) Priorité: 10.07.2014 FR 1456677
(43) Date de publication de la demande: 17.05.2017
(73) Titulaire: Ingenico Inc., Alpharetta, GA 30005 (US)
(72) Inventeur: ROTSAERT, Christopher, F-59290 Wasquehal (FR)
(74) Mandataire: Vidon Brevets & Stratégie
(86) Numéro de dépôt international: PCT/IB2015/055220
(87) Numéro de publication internationale: WO 2016/005947

(56) Documents cités:
- US-A1- 2009 083 160
- US-A1- 2014 008 432
- US-A1- 2014 025 579

## Description

### 1 DOMAINE DE L'INVENTION

La présente invention se rapporte au domaine des transactions bancaires et plus particulièrement des transactions bancaires via un terminal de paiement électronique ne requérant pas la saisie d'un code confidentiel de la part du consommateur/utilisateur (par exemple un terminal présentant un lecteur de piste magnétique).

Plus précisément, l'invention se rapporte à la sécurisation de telles transactions, ainsi qu'à leur ergonomie pour le consommateur.

### 2 SOLUTIONS DE L'ART ANTERIEUR

Les terminaux de paiement électroniques ne requérant/supportant pas la saisie d'un code confidentiel de la part du consommateur, par exemple les terminaux de paiement électroniques présentant uniquement un lecteur de piste magnétique, ont été popularisés aux Etats-Unis pour couvrir le cas d'usage des commerçants effectuant peu de transactions. L'intérêt majeur de ces terminaux est le faible coût.

L'utilisation de tels terminaux de paiement électroniques ne requérant pas la saisie d'un code confidentiel est actuellement essentiellement autorisée aux Etats-Unis et sur d'autres marchés avec des cartes bancaires de crédit de certains groupements.

En revanche, VISA® Europe et dans une tendance générale des marchés ayant déployé des cartes EMV®, l'utilisation de terminaux limités à une lecture de carte magnétique est interdite pour une transaction effectuée par le commerçant.

Une alternative, qui a initialement émergé par l'intermédiaire de « start-up » dans le domaine du paiement mobile, consiste à considérer une transaction de type e-commerce réalisée par le consommateur comme une transaction préparée par le commerçant (constitution du panier d'achat), lequel communique par SMS ou courriel un message au consommateur qui finalise la transaction de type commerce en ligne en utilisant son propre terminal

La procédure de paiement de type commerce en ligne consiste à saisir des données bancaires (numéro, code de sécurité ou cryptogramme, date d'expiration ...), qui sont transmises, de manière sécurisée, à un serveur intermédiaire, lequel transmet ces informations, toujours de manière sécurisée, à l'organisme acquéreur.

Actuellement, une telle procédure de paiement en ligne peut être sécurisée par une technique de sécurisation de type « 3-D Secure® » par exemple, mettant en œuvre une ou plusieurs étapes supplémentaires, consistant à envoyer, par SMS sur le téléphone portable du consommateur ou par courriel à une adresse électronique prédéterminée, un code de sécurisation (statique ou à usage unique), que le consommateur doit ensuite saisir pour réellement valider la transaction. Ces solutions de sécurisation du paiement en ligne fournissent une alternative à la saisie d'un code confidentiel par le consommateur.

Un des inconvénients de ces transactions de commerce en ligne réside dans la transmission, certes à travers une interface sécurisée fournie par le site de commerce en ligne, de données de carte bancaire saisies par le consommateur lui-même, sur son ordinateur par exemple. Ces informations de carte bancaire sont donc disponibles, en clair, sur l'ordinateur du consommateur, affectant ainsi la sécurité de telles transactions.

Un autre inconvénient de ces transactions de commerce en ligne réside dans la multiplication des opérations à effectuer par l'utilisateur (classiquement la saisie du nom du porteur de carte, du numéro de carte à seize chiffres, de la date d'expiration et du code de sécurité à trois chiffres), ainsi que dans la nécessité pour lui de consulter le SMS ou le courriel reçu pour en saisir le code de sécurisation, résultant parfois dans l'abandon de la transaction par le consommateur.

Ainsi, lorsque cette procédure de paiement en ligne est utilisée pour sécuriser une transaction chez un commerçant, après la lecture de la piste magnétique de la carte bancaire, le temps de transaction est fortement allongé et l'ergonomie pour le consommateur est fortement dégradée. En effet, la procédure de commerce en ligne doit être effectuée sur son téléphone portable, ce qui engendre des difficultés supplémentaires liées au potentiel manque de convivialité ou même l'impossibilité de finaliser la transaction si le téléphone mobile de l'utilisateur ne supporte pas ce type d'application de commerce en ligne.

Les documents US2014008432 et US2014025579 décrivent des procédés de sécurisation d'une transaction, respectivement effectuée par une carte bancaire à piste magnétique et une carte de crédit/débit traditionnelle, via l'utilisation d'un dispositif de communication de l'utilisateur tel qu'un téléphone mobile.

Il existe donc un besoin pour une solution permettant de sécuriser une transaction bancaire mise en œuvre sur un terminal de paiement électronique ne requérant pas de saisie d'un code confidentiel, tout en offrant une ergonomie optimale au consommateur en termes de temps de traitement de la transaction et de saisies à effectuer.

En effet, un des enjeux réside dans la possibilité d'utiliser de tels terminaux de paiement électroniques, intrinsèquement moins chers, pour tout type de cartes bancaires, en

respectant les normes de sécurité et en ne dégradant pas l'ergonomie de la transaction pour le consommateur.

### 3 RESUME DE L'INVENTION

L'invention concerne un procédé de gestion d'au moins une transaction mise en œuvre par un terminal de paiement électronique présentant un lecteur de piste magnétique pour la lecture d'une carte de paiement d'un utilisateur.

Selon l'invention, le procédé comprend les étapes décrites dans la revendication 1.

Ainsi, l'invention propose, selon ses différents modes de réalisation particuliers, une solution nouvelle et inventive de la gestion d'une transaction mise en œuvre par un terminal de paiement électronique ne supportant pas la saisie d'un code confidentiel d'un utilisateur, permettant de renforcer la sécurité d'une telle transaction, tout en offrant une ergonomie optimale à l'utilisateur.

L'invention permet de répondre au besoin de l'utilisation d'un terminal peu coûteux en respectant les exigences d'une transaction en ligne avec un niveau de sécurité élevé. Elle permet également d'égaler la sécurité d'une transaction « carte présente » et un « CVM » (pour « Cardholder Vérification Method » en anglais) non nul.

L'invention, selon ses différents modes de réalisation particuliers, permet à la fois de renforcer la sécurité de telles transactions en égalant la sécurité de transaction de type « carte présente », sans pour autant dégrader l'ergonomie pour l'utilisateur, en requérant de l'utilisateur une simple validation de la transaction, sur un terminal mobile en sa possession.

Ainsi, le terminal de paiement électronique transmet, de manière sécurisée, à un serveur intermédiaire sécurisé, les informations lues (par le lecteur de piste magnétique), puis chiffrées, de la carte bancaire de l'utilisateur. Les données de la carte bancaire ne sont donc pas transmises « en clair » au serveur intermédiaire sécurisé, comme dans le cas d'une transaction de commerce en ligne où les données de la carte sont transmises en clair par le terminal de l'utilisateur.

Ces données chiffrées sont utilisées par le serveur intermédiaire sécurisé pour construire un message « de requête de validation de transaction » à destination de l'utilisateur, message comprenant par exemple des informations relatives à la transaction (montant, date et heure ...) ainsi qu'une partie des données de la carte bancaire (par exemple le numéro de carte en partie masqué, le nom du porteur de la carte, la date d'expiration ...) afin que l'utilisateur puisse valider la transaction à partir de ces informations. Ce message de requête de validation de transaction est donc transmis, par le serveur intermédiaire sécurisé, à un terminal mobile de l'utilisateur dont l'identifiant lui a été transmis par le terminal de paiement électronique du commerçant. Cet identifiant peut correspondre à un numéro de téléphone mobile du porteur de carte par exemple, que le commerçant a demandé au porteur de carte et saisi via son terminal de paiement électronique.

Le message de requête de validation de la transaction peut prendre la forme d'un SMS par exemple, ou d'un courriel, et consiste simplement à demander à l'utilisateur son accord pour la transaction identifiée dans le message, par une simple réponse (SMS ou courriel) au message de requête de validation de transaction. Lorsque le porteur de carte répond positivement à ce message de requête de validation de transaction, le serveur intermédiaire sécurisé peut donc ensuite mettre en œuvre les différentes étapes d'une transaction de type « e-commerce », avec l'acquéreur concerné, sans que les données de carte bancaire ne soient transmises en clair et en ne requérant qu'un accord de l'utilisateur porteur de carte par une réponse simple à un message reçu sur son téléphone mobile.

L'invention est également conforme aux exigences d'une transaction en ligne déclenchée par le consommateur sur son terminal.

Selon un aspect particulier de l'invention, le procédé comprend, lorsque la transaction
est finalisée, une étape de transmission d'au moins un message de finalisation de transaction à destination du terminal de paiement électronique et d'au moins un message de finalisation de transaction à destination du terminal mobile de l'utilisateur.

Ainsi, lorsque la transaction a été menée à son terme (acceptée ou refusée), le serveur intermédiaire sécurisé transmet, au terminal de paiement électronique du commerçant ainsi qu'au terminal mobile de l'utilisateur, un message indiquant que la transaction a bien été finalisée. Les deux acteurs de la transaction, à savoir le commerçant et le consommateur, sont donc informés du résultat de la transaction.

Selon l'invention, le procédé comprend en outre une étape de sécurisation de la transaction comprenant les sous-étapes suivantes :
- transmission, par un serveur d'un organisme bancaire correspondant à la carte bancaire de l'utilisateur, à destination d'un terminal de communication de l'utilisateur préalablement identifié auprès de l'organisme bancaire, d'au moins un code de sécurisation ;
- réception, par le serveur intermédiaire sécurisé, du code de sécurisation, en provenance du terminal de communication de l'utilisateur.

Ainsi, pour satisfaire aux exigences de sécurité concernant l'authentification du porteur de la carte, l'invention, selon ce mode de réalisation, intègre une technique de sécurisation mise en œuvre par l'organisme bancaire du porteur de carte. Par exemple, cette technique de sécurisation est du type « 3-D Secure® » et consiste à transmettre à un terminal mobile de l'utilisateur (préalablement renseigné par l'utilisateur auprès de son organisme bancaire) un code (à usage unique ou pas), par exemple alphanumérique, que l'utilisateur doit renvoyer, au serveur intermédiaire, afin de valider la transaction. Le serveur sécurisé traite le message reçu du consommateur pour extraire l'information de validation (le « OK ») ou le code « 3D Secure ».

Selon l'invention, le procédé comprend les étapes suivantes, mises en œuvre par le terminal mobile de l'utilisateur :
- chargement d'une application multimédia ;
- réception et traitement, par l'application multimédia, du message de requête de validation de transaction ;
- affichage, sur le terminal mobile de l'utilisateur, d'une interface utilisateur présentant à l'utilisateur un moyen de validation ;
- transmission, au serveur intermédiaire sécurisé, du message de validation, si l'utilisateur a accepté la transaction via le moyen de validation.

Ainsi, le traitement du message de requête de validation de transaction émis par le serveur intermédiaire sécurisé peut être effectué par une application mobile préalablement téléchargée sur le terminal mobile de l'utilisateur. Par exemple, cette application mobile peut intercepter le message (SMS ou courriel) et le retranscrire à l'utilisateur via une interface utilisateur conviviale et ergonomique présentant par exemple un bouton de validation sur lequel l'utilisateur doit cliquer pour accepter la transaction, au lieu de répondre au SMS ou au courriel.

En particulier, le procédé comprend également une étape de réception du code de sécurisation et le message de validation porte le code de sécurisation.

Ainsi, ce mode de réalisation correspond au cas où une application mobile est utilisée pour gérer la validation d'une transaction, et où une technique de sécurisation, de type 3-D Secure® par exemple, est mise en œuvre. Dans ce cas, l'application mobile peut intercepter le message de l'organisme bancaire transmettant le code de sécurisation et insérer ce code de sécurisation dans le message de validation transmis lorsque l'utilisateur clique sur le bouton de validation de l'interface utilisateur. L'utilisateur n'a ainsi pas à saisir le code de sécurisation reçu mais uniquement à accepter, ou non, la transaction.

Par exemple, le message de requête de validation de transaction correspond à un message de type SMS ou courriel.

Selon un mode de réalisation compatible ne faisant pas partie de l'invention, un serveur intermédiaire sécurisé est également décrit, ce dernier pouvant être configuré pour la mise en œuvre d'un procédé de gestion d'au moins une transaction mise en œuvre par un terminal de paiement électronique présentant un lecteur de piste magnétique pour la lecture d'une carte de paiement d'un utilisateur, un tel serveur intermédiaire sécurisé comprenant les moyens suivants :
- des moyens de réception, en provenance du terminal de paiement électronique, d'au moins un message de transaction, portant au moins une donnée de la carte de paiement de l'utilisateur, lue par le lecteur de piste magnétique et chiffrée par le terminal de paiement électronique, et au moins un identifiant d'un terminal de communication mobile de l'utilisateur ;
- des moyens d'émission, à destination du terminal mobile correspondant à l'identifiant, d'au moins un message de requête de validation de transaction, portant au moins une information représentative de la transaction ;
- des moyens de réception, en provenance du terminal mobile correspondant à l'identifiant, d'au moins un message de validation portant au moins une réponse au message de requête de validation ;
- des moyens de gestion de la transaction si la réponse est positive.

Un tel serveur intermédiaire sécurisé est notamment adapté à mettre en œuvre le procédé de gestion d'au moins une transaction décrit précédemment. Un tel serveur pourra bien sûr comporter les différentes caractéristiques relatives au procédé de gestion d'une transaction selon l'invention, qui peuvent être combinées ou prises isolément. Ainsi, les caractéristiques et avantages de ce serveur sont les mêmes que ceux du procédé de gestion d'au moins une transaction et ne sont pas détaillés plus amplement.

L'invention concerne par ailleurs un programme d'ordinateur téléchargeable depuis un réseau de communication et/ou stocké sur un support lisible par ordinateur et/ou exécutable par un processeur, comprenant des instructions de code de programme pour l'exécution du procédé décrit précédemment, lorsqu'il est exécuté par un processeur.

Le procédé selon l'invention peut donc être mis en œuvre de diverses manières, notamment sous forme câblée ou sous forme logicielle.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

Enfin, l'invention concerne également un medium de stockage lisible par ordinateur et non transitoire, stockant un programme d'ordinateur comprenant un jeu d'instructions exécutables par un ordinateur ou un processeur pour mettre en œuvre le procédé décrit précédemment.

### 4 LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- La figure 1 illustre un exemple de système de mise en œuvre du procédé de gestion d'une transaction, selon un mode de réalisation particulier de l'invention ;
- les figures 2a et 2b présentent les principales étapes du procédé de gestion d'une transaction selon un mode de réalisation de l'invention, dans un système tel qu'illustré en figure 1 ;
- la figure 3 présente un exemple de serveur intermédiaire sécurisé selon un mode de réalisation de l'invention.

### 5 DESCRIPTION DETAILLEE DE L'INVENTION

### 5.1 Principe général

Le principe de l'invention consiste à optimiser la sécurité d'une transaction mise en œuvre par un terminal ne requérant pas la saisie d'un code confidentiel de la part de l'utilisateur, et plus particulièrement à sécuriser la transmission des données de carte bancaire, tout en offrant une ergonomie optimale pour l'utilisateur.

Pour ce faire, l'invention, selon ses différents modes de réalisation, met en œuvre un serveur intermédiaire sécurisé qui permet de faire le lien entre le terminal de paiement électronique (lequel lit les données de la carte bancaire et les chiffre avant de les transmettre de manière sécurisée au serveur intermédiaire sécurisé) du commerçant et le consommateur porteur de la carte bancaire (à qui l'on demande d'accepter la transaction en fonction d'informations y relatives qui lui sont fournies sur son terminal mobile).

Le serveur intermédiaire sécurisé initie ensuite une transaction de commerce en ligne, comme si elle émanait du consommateur, sans que les données de la carte n'aient transité en clair via le terminal mobile de l'utilisateur et sans que l'utilisateur ne soit sollicité pour de multiples saisies (contrairement à une transaction de commerce en ligne classique).

Les différents modes de réalisation de l'invention concernent plus particulièrement les terminaux de paiement électroniques présentant un lecteur de piste magnétique pour lire les données de carte bancaire. Il va de soi cependant que l'invention ne se limite pas à ce type de terminaux de paiement électroniques mais s'applique à tout terminal de paiement électronique devant faire face à une problématique proche ou similaire, c'est-à-dire ne requérant pas la saisie d'un code confidentiel de la part du porteur de carte, mais dont les transactions doivent être plus sécurisées que selon les techniques de l'art antérieur.

### 5.2 Description d'un mode de réalisation

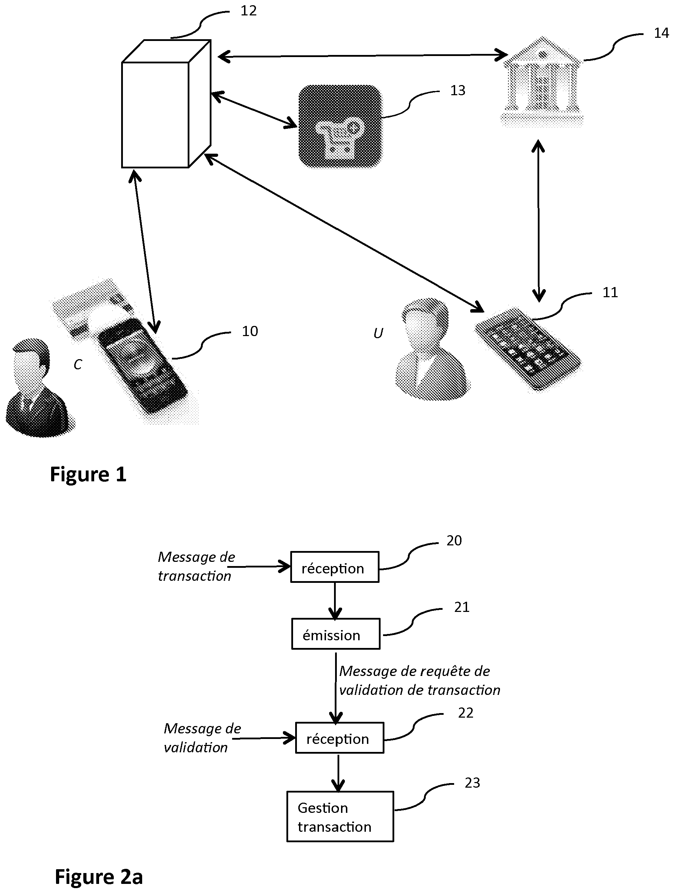

On décrit dans un premier temps un exemple de système, illustré en figure 1, dans lequel l'invention peut être mise en œuvre, selon ses différents modes de réalisation.

Dans le contexte de l'invention, un consommateur/utilisateur *U* souhaite acheter un bien, ou un service, en payant avec sa carte bancaire, via le terminal de paiement électronique 10 d'un commerçant *C.* Ce terminal de paiement électronique 10 permet de lire les données de carte bancaire grâce à un lecteur de piste magnétique.

L'utilisateur *U* est porteur d'un terminal de communication mobile 11, par exemple un smartphone.

Les entités distantes également impliquées sont notamment l'organisme bancaire 14 du porteur de carte (en l'occurrence l'utilisateur *U*) ainsi que le service de paiement en ligne 13, gérant la transaction en ligne correspondant à l'achat effectué par l'utilisateur *U* pour le compte du commerçant *C.* Les autres entités pouvant être impliquées dans une transaction classique de commerce en ligne ne sont pas représentées.

Enfin, un serveur intermédiaire sécurisé 12 est nécessaire, pour la mise en œuvre de l'invention.

Par exemple, et comme illustré en figure 1, un système de référence pour l'application de l'invention comprend, pour le commerçant *C,* un lecteur de type « accessoire de paiement » n'intégrant que les fonctions de lecture de carte et de chiffrement des données lues et étant associé/rattaché à un smartphone communiquant avec le serveur sécurisé 12 et supportant la saisie du panier d'achat ainsi que le numéro de téléphone du consommateur *U.*

On décrit maintenant, en relation avec la figure 2a, les principales étapes du procédé de gestion d'une transaction selon un mode de réalisation particulier de réalisation de l'invention, dans un système tel que décrit précédemment en relation avec la figure 1.

Selon ce mode de réalisation de l'invention, le commerçant *C* insère la carte bancaire de l'utilisateur *U* dans le lecteur de piste magnétique de son terminal de paiement électronique 10, afin d'initier la transaction pour l'achat du bien ou du service souhaité par l'utilisateur *U.* Les données de la carte bancaire sont lues puis chiffrées par le terminal de paiement électronique 10 avant d'être transmises de manière sécurisée, via un message de transaction, au serveur intermédiaire sécurisé 12.

Selon ce mode de réalisation de l'invention, un identifiant du terminal mobile 11 de l'utilisateur *U* est également transmis via le message de transaction.

Le serveur intermédiaire sécurisé 12 reçoit donc, lors d'une étape 20 de réception, un message de transaction, portant notamment au moins une des données de carte bancaire de l'utilisateur *U,* ainsi que l'identifiant du terminal mobile 11.

Le serveur intermédiaire sécurisé 12 émet alors, lors d'une étape 21 d'émission, un message de requête de validation de transaction, à destination du terminal mobile 11, identifié dans le premier message reçu. Ce message de requête de validation de transaction a pour but de permettre à l'utilisateur de valider la transaction, de manière simple et ergonomique, à partir d'informations y relatives.

Selon différentes variantes de réalisation, ce message de requête de validation de transaction peut être émis par le serveur intermédiaire sécurisé 12 sous la forme d'un SMS ou d'un courriel, affichant notamment les informations détaillées ci-dessous, et auquel l'utilisateur *U* peut répondre par un message du même format/type (un SMS ou un courriel).

Par exemple, le message de requête de validation de transaction comprend des informations sur la date et l'heure de la transaction, le montant de la transaction, le commerçant, ... ainsi qu'une partie des informations lues de la carte bancaire de l'utilisateur *U* (le numéro de carte tronqué, le nom du porteur, la date d'expiration ...). De cette manière, l'utilisateur *U* peut valider la transaction s'il reconnaît que les informations sont correctes.

De plus, ce message de requête de validation de transaction comprend un texte à destination de l'utilisateur lui indiquant comment répondre pour valider la transaction. Par exemple, le texte indique à l'utilisateur de répondre au même numéro en indiquant « OK » dans la réponse.

Ainsi, l'utilisateur *U* n'a qu'un nombre restreint de saisies à effectuer, par exemple valider le choix « répondre » au SMS ou au courriel, et saisir un texte de validation, comme indiqué dans le message de requête de validation de transaction (par exemple « OK »).

Pour encore plus d'ergonomie pour l'utilisateur *U,* et si son terminal mobile 11 le permet, une application multimédia particulière peut être chargée sur ce terminal mobile 11 (par exemple au moment où l'utilisateur *U* reçoit ou active sa carte bancaire). Une fois installée dans le terminal mobile 11, l'application multimédia peut intercepter le message de requête de validation de transaction pour le décoder et afficher ensuite à l'écran une interface utilisateur spécifique. Par exemple, cette interface utilisateur restitue non seulement toutes les informations concernant la transaction, mais fournit également à l'utilisateur un moyen de validation simple et ergonomique (comme un bouton « OK » sur lequel l'utilisateur peut cliquer). Ainsi, en une seule saisie (par exemple un click sur un bouton), l'utilisateur *U* peut valider la transaction, à partir de son terminal mobile 11.

Quelle que soit la variante de réalisation (réponse à un SMS ou un courriel, ou via une application multimédia), un message de validation est donc transmis, par le terminal mobile 11 de l'utilisateur *U,* au serveur intermédiaire sécurisé 12, qui le reçoit lors d'une étape 22 de réception.

Ce message de validation comprend donc une réponse à la requête de validation de transaction, que le serveur intermédiaire sécurisé 12 peut interpréter afin d'initier ou non une transaction de commerce en ligne, classique, notamment en relation avec le service de paiement en ligne 13.

Ainsi, si la réponse de l'utilisateur est positive, le serveur intermédiaire sécurisé 12 met en œuvre une étape 23 de gestion d'une transaction de commerce en ligne, de manière classique. En revanche, contrairement à une transaction de commerce en ligne, les données de carte bancaire ne sont pas transmises à partir du terminal mobile 11 de l'utilisateur *U* mais proviennent, de manière sécurisée et chiffrée, du terminal de paiement électronique 10 du commerçant *C.*

Selon ces différents modes de réalisation de l'invention, le serveur intermédiaire sécurisé 12 permet de faire le lien entre le commerçant *C* et l'utilisateur *U,* afin de sécuriser la transmission des données de carte bancaire tout en optimisant l'ergonomie de la transaction pour l'utilisateur *U.*

Lorsque la transaction est finalisée, le serveur intermédiaire sécurisé 12 émet un message de confirmation à destination du commerçant *C,* via son terminal de paiement électronique 10, ainsi qu'à destination de l'utilisateur *U,* via son terminal mobile 11.

Si l'utilisateur *U* ne valide pas la transaction, un message de validation portant une réponse négative peut être reçu par le serveur intermédiaire sécurisé 12, lequel n'initie alors pas de transaction de commerce en ligne, mettant ainsi fin à la transaction.

Ou bien, si le serveur intermédiaire sécurisé 12 ne reçoit pas de réponse, via un message de validation, à son message de requête de validation de transaction, au bout d'un certain temps (par exemple à l'expiration d'un timer enclenché à l'émission du message de requête de validation de transaction), il met fin à la transaction.

Selon un mode de réalisation particulier de l'invention, une technique de sécurisation supplémentaire peut être mise en œuvre, par exemple à l'initiative de l'organisme bancaire 14 du porteur de carte, comme pour une transaction de commerce en ligne classique. Par exemple, cette technique de sécurisation est de type 3-D Secure® et consiste à transmettre, sur un terminal de communication du porteur de carte (préalablement identifié auprès de l'organisme bancaire 14) un code de sécurisation, que l'utilisateur doit ensuite saisir sur l'interface de paiement en ligne, afin de valider la transaction.

Le numéro du terminal de communication renseigné auprès de l'organisme bancaire 14 peut être celui du terminal mobile 11, ou d'un autre terminal de communication en possession de l'utilisateur *U.*

S'il s'agit du terminal mobile 11, l'utilisateur *U* reçoit donc le code de sécurité sur ce terminal mobile 11 et doit le saisir, également sur son terminal mobile 11, en réponse au message de requête de validation de transaction émis par le serveur intermédiaire sécurisé 12.

Dans le cas où une application multimédia est installée sur ce terminal mobile 11 pour traiter les messages de requête de validation de transaction émis par le serveur intermédiaire sécurisé 12, cette application multimédia peut intercepter également le message émis par l'organisme bancaire 14, afin d'en extraire le code de sécurité. Elle peut ensuite l'inclure automatiquement dans le message de validation qui sera transmis en retour au serveur intermédiaire sécurisé 12, lorsque l'utilisateur aura validé la transaction.

Ainsi, une technique de sécurisation supplémentaire de la transaction, permettant notamment de s'assurer de l'authentification du porteur de la carte, peut être intégrée au procédé de gestion d'une transaction selon ce mode de réalisation particulier de l'invention, renforçant encore la sécurité d'une telle transaction.

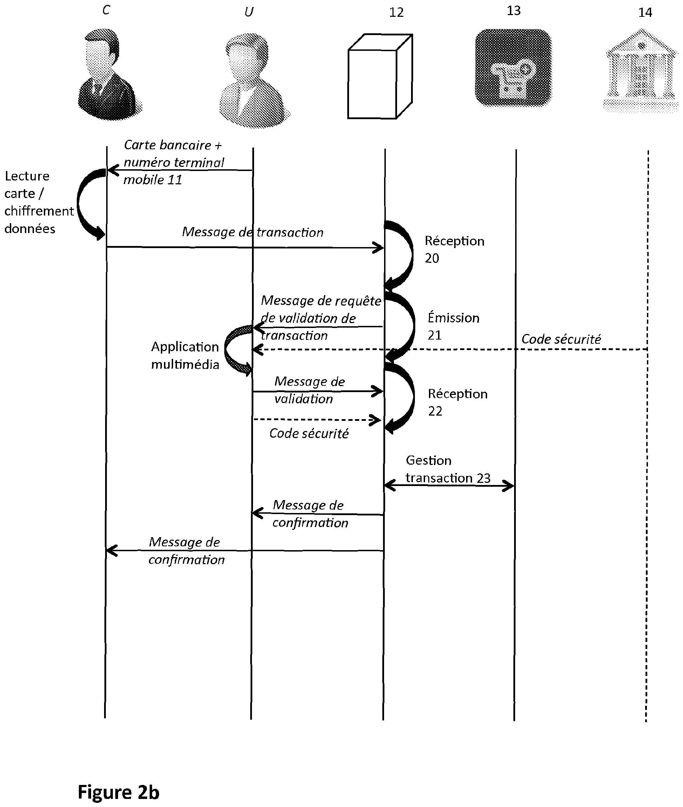

La figure 2b illustre les principales étapes du procédé de gestion d'une transaction décrite ci-dessus, sous la forme d'un diagramme de séquences, selon un mode de réalisation particulier de réalisation de l'invention, dans un système tel que décrit précédemment en relation avec la figure 1.

Sur cette figure 2b, les échanges entre entités et les éléments optionnels sont représentés en pointillés (par exemple la mise en œuvre de l'application multimédia sur le terminal mobile 11 de l'utilisateur *U,* ou encore la sécurisation par transmission d'un code de sécurité de l'organisme bancaire de l'utilisateur *U* vers le terminal mobile 11 de l'utilisateur *U*).

On considère donc un utilisateur *U* qui souhaite acheter un bien ou un service auprès du commerçant *C,* qui initie une transaction via son terminal de paiement électronique 10. Pour ce faire, l'utilisateur *U* fournit au commerçant *C* sa carte bancaire, ainsi que le numéro de son terminal mobile 11 (par exemple son smartphone). Le commerçant *C* insère la carte bancaire de l'utilisateur *U* dans le lecteur de piste magnétique de son terminal de paiement électronique 10, afin de lire les données de carte bancaire nécessaires à toute transaction. Le commerçant *C* saisit ensuite (par exemple en réponse à un message affiché sur l'écran de son terminal de paiement électronique 10), sur son terminal de paiement électronique 10, le numéro du terminal mobile 11 fourni par l'utilisateur *U.*

Le terminal de paiement électronique 10 du commerçant *C* chiffre les données de carte bancaire lues puis les insère, avec le numéro du terminal mobile 11, dans un message de transaction. Ce message de transaction est ensuite transmis, de manière sécurisée, par le terminal de paiement électronique 10 au serveur intermédiaire sécurisé 12.

Ce dernier reçoit donc le message de transaction, lors d'une étape 20 de réception, et le traite de façon à construire un message de requête de validation de transaction destiné à l'utilisateur *U,* via le terminal mobile identifié par le numéro porté par le message de transaction préalablement reçu. Ce message de requête de validation de transaction porte par exemple des informations concernant la transaction (date et heure, montant, lieu de la transaction, identification du commerçant ...), ainsi que des informations relatives à la carte bancaire de l'utilisateur *U* (par exemple le numéro de carte tronqué pour assurer la sécurité, la date d'expiration, le nom du titulaire, ...). Ainsi, l'utilisateur recevant ce message peut identifier la transaction dont il s'agit et la valider ou non, en connaissance de cause.

Ce message de requête de validation de transaction est transmis par le serveur intermédiaire sécurisé 12 au terminal mobile 11, lors d'une étape d'émission 21, par exemple sous la forme d'un SMS ou d'un courriel. De plus, comme déjà indiqué, le message contient également des indications à destination de l'utilisateur pour la formulation de sa réponse au message (par exemple un texte indiquant que l'utilisateur doit répondre au même numéro, par retour, avec « OK » dans le corps de son SMS ou courriel).

Selon une variante de réalisation, déjà décrite ci-dessus, lorsqu'une application multimédia spécifique est installée sur le terminal mobile 11, cette application intercepte le message de requête de validation de transaction et le restitue à l'utilisateur sous la forme d'une interface utilisateur conviviale et ergonomique. Par exemple, cette interface utilisateur présente un bouton permettant à l'utilisateur de valider la transaction simplement en cliquant dessus. L'interface utilisateur peut également proposer un bouton de refus de la transaction, permettant ainsi à l'utilisateur *U* de ne pas valider la transaction.

Ensuite, quelle que soit la variante de réalisation, un message de validation est transmis par le terminal mobile 11 à destination du serveur intermédiaire sécurisé 12, portant la réponse de validation que l'utilisateur *U* a saisie.

Ce message est reçu et traité par le serveur intermédiaire sécurisé 12, lors d'une étape 22 de réception, de façon à poursuivre ou non la transaction, sous la forme d'une transaction de commerce en ligne, en relation notamment avec le service de paiement en ligne 13.

Ainsi, si la réponse portée par le message de validation est positive, le serveur intermédiaire sécurisé 12 initie une transaction de commerce en ligne, lors d'une étape 23 de gestion de transaction, comme si la transaction émanait de l'utilisateur *U,* mais sans que les données de carte bancaire n'aient transité en clair en provenance de l'utilisateur *U.*

Comme déjà indiqué ci-dessus, une technique de sécurisation (par exemple via la transmission d'un code de sécurité), permettant d'authentifier le porteur de la carte bancaire, peut également être mise en œuvre, optionnellement, lorsque l'organisme bancaire du porteur de carte l'exige dans le cas de transactions de type commerce en ligne.

Enfin, lorsque la transaction de commerce en ligne est finalisée, entre le serveur intermédiaire sécurisé 12 et le service de paiement en ligne 13 notamment, le serveur intermédiaire sécurisé 12 envoie un message de confirmation de transaction à la fois au commerçant *C* via son terminal de paiement électronique 10, et à l'utilisateur *U* via son terminal mobile 11.

### 5.3 Description d'un exemple de serveur intermédiaire sécurisé

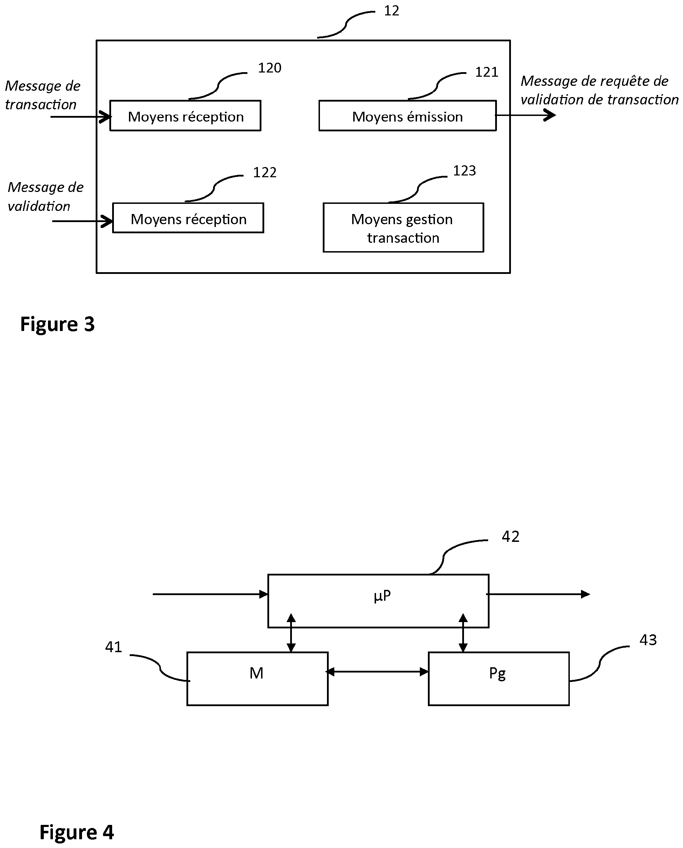

On décrit maintenant, en relation avec la figure 3 et la figure 4, un exemple de serveur intermédiaire sécurisé mettant en œuvre le procédé de gestion de transaction, selon l'un quelconque des modes de réalisation particuliers de l'invention.

Comme illustré sur la figure 3, le serveur intermédiaire sécurisé 12 comprend notamment des moyens de réception de messages 120 et 122, par exemple sous la forme d'un ou plusieurs modules de réception distincts. Ainsi, le serveur intermédiaire sécurisé 12 est notamment apte à recevoir un message de transaction émis par un terminal de paiement électronique (non représenté) et un message de validation émis par un terminal mobile (non représenté).

Le serveur intermédiaire sécurisé 12 comprend également des moyens d'émission 121 de message, par exemple sous la forme d'un module d'émission, permettant notamment d'émettre un message de requête de validation de transaction par exemple à destination d'un terminal mobile (non représenté).

Enfin, le serveur intermédiaire sécurisé 12 comprend également des moyens de gestion de transaction 123, sous la forme d'un ou plusieurs modules permettant notamment de communiquer avec une ou plusieurs entités distantes (non représentées) pour la mise en œuvre d'une transaction de type commerce en ligne.

Le serveur intermédiaire sécurisé 12 intègre également un module de décryptage (par exemple un module dit « HSM », pour « Hardware Secure Module » en anglais), encore appelé module de sécurité, qui décrypte la donnée carte reçue du lecteur avant de la transmettre au serveur e-commerce 13.

Par ailleurs, le serveur intermédiaire sécurisé 12 est également apte à reformater cette donnée carte décryptée avant de la transmettre au serveur e-commerce 13. Ce reformatage peut également être mis en œuvre par le module de décryptage du serveur intermédiaire sécurisé 12.

Selon une variante de réalisation, dans laquelle le serveur intermédiaire sécurisé est en partie contrôlé par le serveur e-commerce 13, les fonctions de cryptage et de reformatage peuvent être mises en œuvre par ce serveur e-commerce 13.

La figure 4 illustre quant à elle un exemple de structure simplifiée d'un tel serveur intermédiaire sécurisé 12 comprenant une mémoire 41 constituée d'une mémoire tampon M, une unité de traitement 42, équipée par exemple d'un microprocesseur, et pilotée par le programme d'ordinateur 43, mettant en œuvre le procédé de gestion de transaction selon les différents modes de réalisation de l'invention.

À l'initialisation, c'est-à-dire à la mise sous tension du serveur intermédiaire sécurisé 12, les instructions de code du programme d'ordinateur 43 sont par exemple chargées dans une mémoire avant d'être exécutées par le processeur de l'unité de traitement 42. L'unité de traitement 42 reçoit en entrée au moins un message de transaction et met en œuvre les étapes du procédé de gestion de transaction, selon les instructions du programme d'ordinateur 43 pour effectuer une transaction sécurisée et ergonomique.

## Revendications

1. Procédé de gestion d'au moins une transaction mise en œuvre par un terminal de paiement électronique (10) présentant un lecteur de piste magnétique pour la lecture d'une carte de paiement d'un utilisateur (*U*), **caractérisé en ce qu'**il comprend les étapes suivantes, mises en œuvre dans un serveur distant sécurisé (12) :
• une étape de réception (20), en provenance dudit terminal de paiement électronique (10), d'au moins un message de transaction, portant au moins une donnée de ladite carte de paiement dudit utilisateur (*U*), lue par ledit lecteur de piste magnétique et chiffrée par ledit terminal de paiement électronique (10), et au moins un identifiant d'un terminal de communication mobile (11) dudit utilisateur (*U*) *;*
• une étape d'émission (21), à destination dudit terminal mobile (11) correspondant audit identifiant, d'au moins un message de requête de validation de transaction, portant au moins une information représentative de ladite transaction ;
• une étape de réception (22), en provenance dudit terminal mobile (11) correspondant audit identifiant, d'au moins un message de validation portant au moins une réponse audit message de requête de validation ;
• une étape de gestion (23) de ladite transaction si ladite réponse est positive ;
et une étape de sécurisation de ladite transaction comprenant les sous-étapes suivantes :
• transmission, par un serveur d'un organisme bancaire correspondant à ladite carte bancaire dudit utilisateur, à destination dudit terminal mobile, d'au moins un code de sécurisation ;
• réception, par ledit serveur intermédiaire sécurisé, dudit code de sécurisation, en provenance dudit terminal mobile ;
et les étapes suivantes, mises en œuvre par ledit terminal mobile dudit utilisateur :
• chargement d'une application multimédia ;
• réception et traitement, par ladite application multimédia, dudit message de requête de validation de transaction ;
• réception dudit code de sécurisation et insertion dudit code de sécurisation dans ledit message de validation ;
• affichage, sur ledit terminal mobile dudit utilisateur, d'une interface utilisateur présentant audit utilisateur un moyen de validation ;
• transmission, audit serveur intermédiaire sécurisé, dudit message de validation, si l'utilisateur a accepté la transaction via ledit moyen de validation.

2. Procédé de gestion d'au moins une transaction selon la revendication 1, **caractérisé en ce qu'**il comprend, lorsque ladite transaction est finalisée, une étape de transmission d'au moins un message de finalisation de transaction à destination dudit terminal de paiement électronique et d'au moins un message de finalisation de transaction à destination dudit terminal mobile dudit utilisateur.

3. Procédé de gestion d'au moins une transaction selon l'une quelconque des revendications 1 à 2, **caractérisé en ce que** ledit message de requête de validation de transaction correspond à un message de type SMS ou courriel.

4. Programme d'ordinateur téléchargeable depuis un réseau de communication et/ou stocké sur un support lisible par ordinateur et/ou exécutable par un processeur, **caractérisé en ce qu'**il comprend des instructions de code de programme pour l'exécution du procédé selon l'une quelconque des revendications 1 à 3, lorsqu'il est exécuté par un processeur.

5. Medium de stockage lisible par ordinateur et non transitoire, stockant un programme d'ordinateur comprenant un jeu d'instructions exécutables par un ordinateur ou un processeur pour mettre en œuvre le procédé selon l'une quelconque des revendications 1 à 3.

## Patentansprüche

1. Verfahren für die Verwaltung mindestens einer Transaktion, die durch ein elektronisches Zahlungsendgerät (10) durchgeführt wird, welches einen Magnetstreifenleser für das Lesen einer Zahlungskarte eines Nutzers (U) aufweist, **dadurch gekennzeichnet, dass** es die folgenden Schritte umfasst, welche in einem gesicherten entfernten Server (12) durchgeführt werden:
• einen Schritt des Empfangens (20) mindestens einer Transaktionsnachricht von dem elektronischen Zahlungsendgerät (10) mit mindestens einer Angabe der Zahlungskarte des Nutzers (U), das von dem Magnetstreifenleser gelesen und von dem elektronischen Zahlungsendgerät (10) verschlüsselt wird, und mindestens einer Kennung eines mobilen Kommunikationsendgeräts (11) des Nutzers (U),
• einen Schritt des Sendens (21) mindestens einer Transaktionsvalidierungsanforderungsnachricht an das der Kennung entsprechende mobile Endgerät (11) mit mindestens einer für die Transaktion repräsentativen Information,
• einen Schritt des Empfangens (22) mindestens einer Validierungsnachricht von dem der Kennung entsprechenden mobilen Endgerät (11) mit mindestens einer Antwort auf die Validierungsanforderungsnachricht,
• einen Schritt der Verwaltung (23) der Transaktion, wenn die Antwort positiv ist,
und einen Schritt der Sicherung der Transaktion mit den folgenden Teilschritten:
• Übertragung mindestens eines Sicherungscodes durch einen Server eines der Bankkarte des Nutzers entsprechenden Bankinstituts an das mobile Endgerät,
• Empfang des Sicherungscodes von dem mobilen Endgerät durch den gesicherten Zwischenserver,
und die folgenden Schritte, die durch das mobile Endgerät des Nutzers durchgeführt werden:
• Laden einer Multimedia-Anwendung,
• Empfang und Verarbeitung der Transaktionsvalidierungsanforderungsnachricht durch die Multimedia-Anwendung,
• Empfang des Sicherungscodes und Einfügen des Sicherungscodes in die Validierungsnachricht,
• Anzeige einer Benutzerschnittstelle am mobilen Endgerät des Nutzers, welche dem Nutzer ein Validierungsmittel anbietet,
• Übertragung der Validierungsnachricht an den gesicherten Zwischenserver, wenn der Nutzer die Transaktion über das Validierungsmittel angenommen hat.

2. Verfahren für die Verwaltung mindestens einer Transaktion nach Anspruch 1, **dadurch gekennzeichnet, dass** es umfasst, wenn die Transaktion beendet ist, einen Schritt der Übertragung mindestens einer Transaktionsbeendigungsnachricht an das elektronische Zahlungsendgerät und mindestens einer Transaktionsbeendigungsnachricht an das mobile Endgerät des Nutzers.

3. Verfahren für die Verwaltung mindestens einer Transaktion nach einem beliebigen der Ansprüche 1 bis 2, **dadurch gekennzeichnet, dass** die Transaktionsvalidierungsanforderungsnachricht einer Nachricht des Typs SMS oder E-Mail entspricht.

4. Rechnerprogramm, das aus einem Kommunikationsnetzwerk heruntergeladen und/oder auf einem von einem Rechner lesbaren Medium gespeichert und/oder durch einen Prozessor ausgeführt werden kann, **dadurch gekennzeichnet, dass** es Programmcodebefehle für die Ausführung des Verfahrens nach einem beliebigen der Ansprüche 1 bis 3 umfasst, wenn es durch einen Prozessor ausgeführt wird.

5. Von einem Rechner lesbares und nichtflüchtiges Speichermedium, das ein Rechnerprogramm mit einem Satz von Befehlen speichert, die von einem Rechner oder einem Prozessor ausgeführt werden können, um das Verfahren nach einem beliebigen der Ansprüche 1 bis 3 auszuführen.

## Claims

1. Method for managing at least one transaction implemented by an electronic payment terminal (10) having a magnetic stripe reader for the reading of a paycard of a user (U), **characterized in that** it comprises the following steps implemented in a secured remote server (12):
• a step (20) for receiving, from said electronic payment terminal (10), at least one transaction message carrying at least one piece of data of said payment card of said user (U), read by said magnetic stripe reader and encrypted by said electronic payment terminal (10), and at least one identifier of a mobile communications terminal (11) of said user (U);
• a step (21) for sending, to said mobile terminal (11) corresponding to said identifier, at least one transaction validation request message carrying at least one piece of information representing said transaction;
• a step (22) for receiving, from said mobile terminal (11) corresponding to said identifier, at least one validation message carrying at least one response to said validation request message;
• a step (23) for managing said transaction if said response is positive;
and a step for securing said transaction comprising the following sub-steps:
• transmission of at least one securing code, by a server of a bank organization corresponding to said bank card of said user, to said mobile terminal;
• reception by said secured intermediate server of said securing code coming from said mobile terminal;
and the following steps implemented by said mobile terminal of said user:
• loading of a multimedia application;
• reception and processing by the multimedia application of the transaction validation request message;
• display, on the mobile terminal of said user, of a user interface presenting the user with a validation means;
• transmission, to said secured intermediate server, of said validation message if the user has accepted the transaction via said validation means.

2. Method for managing at least one transaction according to claim 1, **characterized in that** it comprises, when said transaction is finalized, a step for transmitting at least one transaction finalizing message intended for said electronic payment terminal and at least one transaction finalizing message intended for said mobile terminal of said user.

3. Method for managing at least one transaction according to any one of the claims 1 to 2, **characterized in that** said transaction validation request message corresponds to an SMS or email type message.

4. Computer program downloadable from a communications network and/or stored on a computer-readable support and/or executable by a processor, **characterized in that** it comprises program code instructions for the execution of the method according to any one of the claims 1 to 3, when it is executed by a processor.

5. Computer-readable and non-transient storage medium storing a computer program comprising a set of instructions executable by a computer or a processor to implement the method according to any one of the claims 1 to 3.
